# EUROPEAN PATENT SPECIFICATION

(11) **EP 0 620 315 B1**
(45) Date of publication and mention of the grant of the patent: **12.11.2003**
(21) Application number: 94302478.6
(22) Date of filing: 07.04.1994
(51) Int. Cl.: D21H 17/29, B41M 5/00

(54) **Paper sizing process and composition therefor**
Verfahren und Zusammensetzung zur Leimung von Papier
Procédé et composition de collage de papier

(30) Priority: 16.04.1993 GB 9307866
(43) Date of publication of application: 19.10.1994
(73) Proprietor: CERESTAR HOLDING BV, NL-4550 AA Sas Van Gent (NL)
(72) Inventor: Fitton, Michael G., B-1060 Brussel (BE); van der Auwera, Luc A., B-2820 Bonheiden (BE); Hemmes, Jan-Luiken, Dr., D-47799 Krefeld (DE)
(74) Representative: Wilkinson, Stephen John

(56) References cited:
- EP-A- 0 257 772
- EP-A- 0 350 668
- US-A- 4 029 544
- US-A- 4 387 221

## Description

The present invention relates to a paper sizing process using a starch-containing composition in which each starch molecule is substituted by a cationic group and an n-alkenylsuccinyl group wherein the n-alkenylsuccinyl group contains 5 to 20 carbon atoms in the alkenyl chain.

EP-A-350 668 describes and claims a starch composition which is a physical mixture of 10-70% (by weight) of a cationic starch and 30 to 90% (by weight) of an ASA-treated starch, said ASA-treated starch being a monoester of an alkenyl succinate. In the context of the patent "ASA" stands for "alkenylsuccinic anhydride". The starch mixture of EP-A-350 668 is said to be of particular utility as an external size for paper or paperboard when applied as an aqueous dispersion having a solids content of about 2 to about 20% by weight.

The starch blends described in EP-A-350 668 are prepared by the physical admixture of a cationic starch and an ASA-treated starch and the resulting mixture is therefore made up of starch molecules substituted by a single essential substituent. We have found however that although an effective size the compositions of EP-A 350 668 have a significant disadvantage in service because starch is lost when the paper is repulped and recycled. We have also found however that this disadvantage may be overcome if, instead of a mixture of two starches each substituted by single essential substituent, a doubly substituted starch is used as the basis of the sizing composition in which the starch contains both essential substituents in the same molecule. The new composition may be used as an internal as well as an external size in paper and paperboard processing.

U.S.-A-4 626 288 contains a description of a product which is made by reacting a cationised starch ether with tetradecenylsuccinic anhydride. The product is not however suggested as a sizing agent but as a product giving a high temperature gel with a strong gel structure of particular utility in food preparations.

According to the present invention therefore a process for the sizing of a paper composition is characterised by incorporating in, or applying to the paper a starch composition in which the starch molecules in the composition are substituted by both cationic and n-alkenylsuccinyl groups, wherein the n-alkenylsuccinyl group contains 5 to 20 carbon atoms in the alkenyl chain.

The sizing process may be carried out under conditions which are conventional for the application of starch-based sizes to paper and paperboard. Thus, the starch composition may be incorporated into the paper pulp ie at the "wet-end" of the paper making process (internal size) or may be applied to the paper sheet in a size press (external size). For both applications the starch composition should be gelatinised before use and for use as an external size it is preferred that the starch composition is applied as a gelatinised aqueous dispersion comprising 2 to 30% by weight solids.

The cationic substituent in the starch molecule may be any such substituent which is found in conventional mono-substituted cationic starches. Preferably the cationic substituent is a tertiary amino or quaternary ammonium group such as the product obtained by reacting starch under alkaline conditions with a dialkylaminoalkylhalide, a trialkylammoniumalkylhalide, a dialkylaminoalkylchlorohydrin, a trialkylammoniumalkylchlorohydrin or with an epoxide form of the chlorohydrins. Particularly preferred are cationic substituents introduced by reacting maize, waxy maize, wheat, barley or potato starch with the chlorohydrin 3-chloro-2-(hydroxypropyl)-trialkylammonium chloride or its epoxide equivalent. "Alkyl" in the latter compound is suitably methyl, ethyl or propyl.

The n-alkenylsuccinyl substituent contains 5 to 20 carbon atoms in the alkenyl chain, the n-octenyl-succinyl substituent being preferred.

The doubly substituted starch which is used in the compositions according to the invention is preferably prepared from a cationic starch by reaction with n-alkenylsuccinic anhydride. The cationic starch is prepared, for example, by the reaction of starch with a chlorohydrin such as 3-chloro-2-(hydroxypropyl)-trimethylammonium chloride suitably at a temperature of 40 to 45 °C and at a pH of 11 or more. The cationic starch which is produced suitably has a degree of substitution of 0.005 to 0.06 , preferably 0.01 to 0.05. The subsequent reaction of the cationic starch with the n-alkenylsuccinic anhydride is suitably carried out at a pH of about 8 and at a temperature in the range 20 to 30 °C. The degree of substitution of the n-alkenylsuccinyl group is suitably 0.01 to 0.06 preferably 0.02 to 0.04.

When the doubly substituted starch is to be used as an internal size, ie. it is added to the paper pulp, it is generally undegraded but when used a an external size it is preferably lightly degraded by treatment with an acid or enzyme or with an oxidising agent such as hydrogen peroxide or sodium hypochlorite The degradation may take place before or after substitution or at an intermediate substitution stage. Preferably it takes place after the cationisation but before the reaction of the cationised starch with the n-alkenylsuccinic anhydride. It is also desirable to include an antifoam agent, eg a silicone, in the composition to counter the surface active effect of the n-alkenylsuccinyl group.

EP-A-350 668, referred to above, discloses that the addition of a small amount of an aluminium III salt enhances the properties of the mixture of starches described in the patent, aluminium chloride being preferred. In a similar manner an aluminium salt will enhance the performance of the starch composition according to the present invention, although it must be borne in mind that aluminium chloride is a very corrosive chemical and, we have found, the presence of the aluminium salt increases the foaming tendencies of all the compositions in which it is used.

Paper produced using a sizing process according to the present invention is particularly suitable for ink-jet printing.

The invention will now be further described and illustrated by reference to the following Example.

### Example

### a) Preparation of doubly-substituted starches.

### Cationisation

A 37% by weight slurry of native corn starch containing 7.5% by weight based on dry starch of sodium chloride was heated to 40°C and 2.2 % by weight based on dry starch of 3-chloro-2-(hydroxypropyl)-trimethylammonium chloride added followed by 1.5 % by weight based on dry starch of sodium hydroxide (15 % by weight aqueous solution). The reaction pH was about 11.5 and the reaction time at 40°C, 5 hours.

On completion of the reaction the pH of the reaction mixture was reduced to 0.6 by the addition of hydrochloric acid and the mixture heated to 50°C and maintained at that temperature for a period of 21 hours.

On completion of the acid thinning process the pH of the reaction mixture was adjusted to 8.0 to 8.5 by the addition of sodium hydroxide solution and n-octenylsuccinic anhydride added in amounts, based on dry starch, of 1%, 3% and 5% respectively. The reaction mixture was then held at 30°C for one hour while maintaining the pH at 8.0 to 8.5. The reaction mixture was finally neutralised to pH 5 and the product washed with water. Incorporation of the n-octenylsuccinic anhydride was greater than 90% in each case.

### b) Preparation of the Sizing Composition.

The starches prepared in (a) above were made up into aqueous dispersions which contained 15 to 16.5% dry solids. The dispersions were then heated in a batch cooker at 95 °C for 30 minutes in order to gelatinise the starch. Significant properties of the starch dispersions are given in the following Table 1.

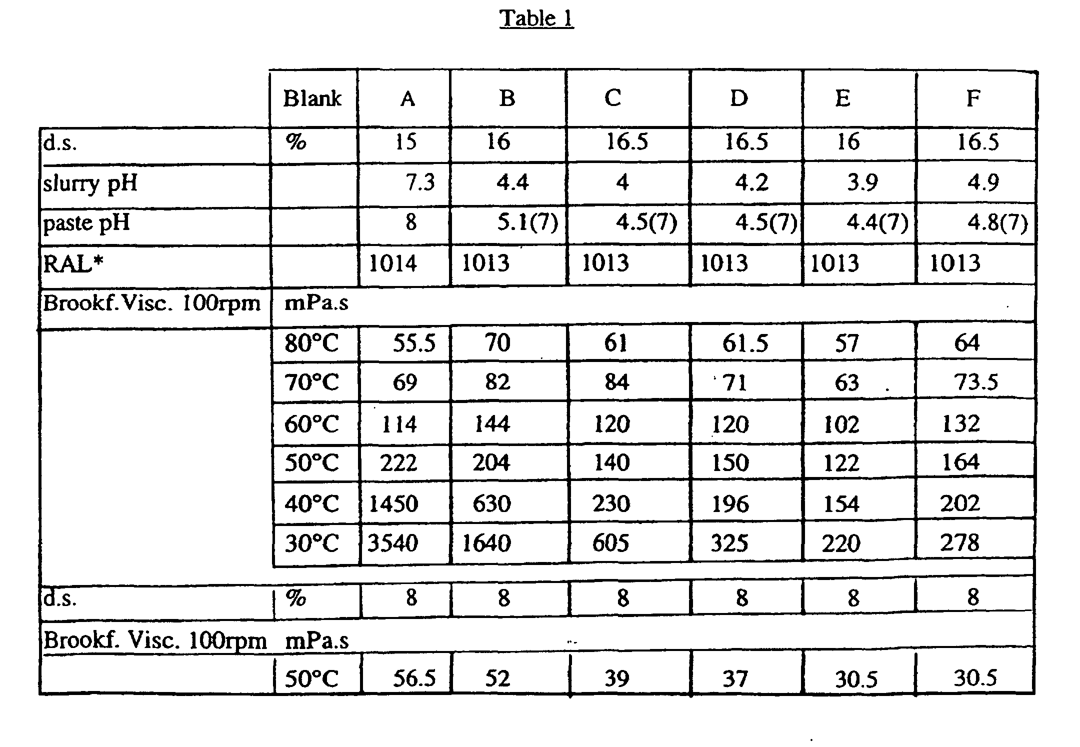

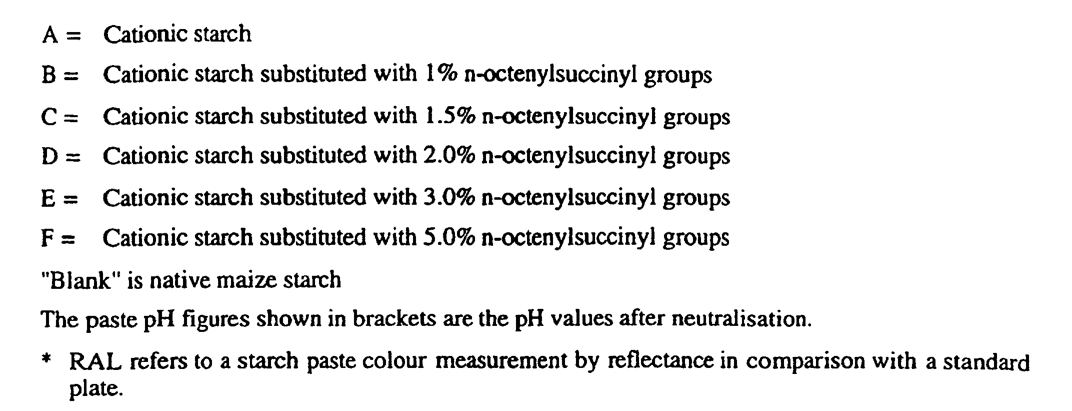

Compared with the cationic starch A the doubly substituted starch samples give sizing compositions with substantially improved viscosity stability. In addition, the compositions containing starches with more than 1% n-octenylsuccinyl groups exhibited virtually no retrogradation of the gelatinised starch dispersion at a d.s. (dry solids) content of 15%.

### c) Sizing.

The dispersions described in (b) above were used at a dry solids level of 8% in a laboratory size coater to coat a 80 g/m² wood-free base paper with internal sizing (UK paper, Cobb value : 20 g/m²). The pick-up of dry starch was approximately 2.6 g/m² overall.

The size-press treated sheets were tested after conditioning according to procedures specified in DIN or TAPPI standards. The results of the various tests are shown below in Table 2.

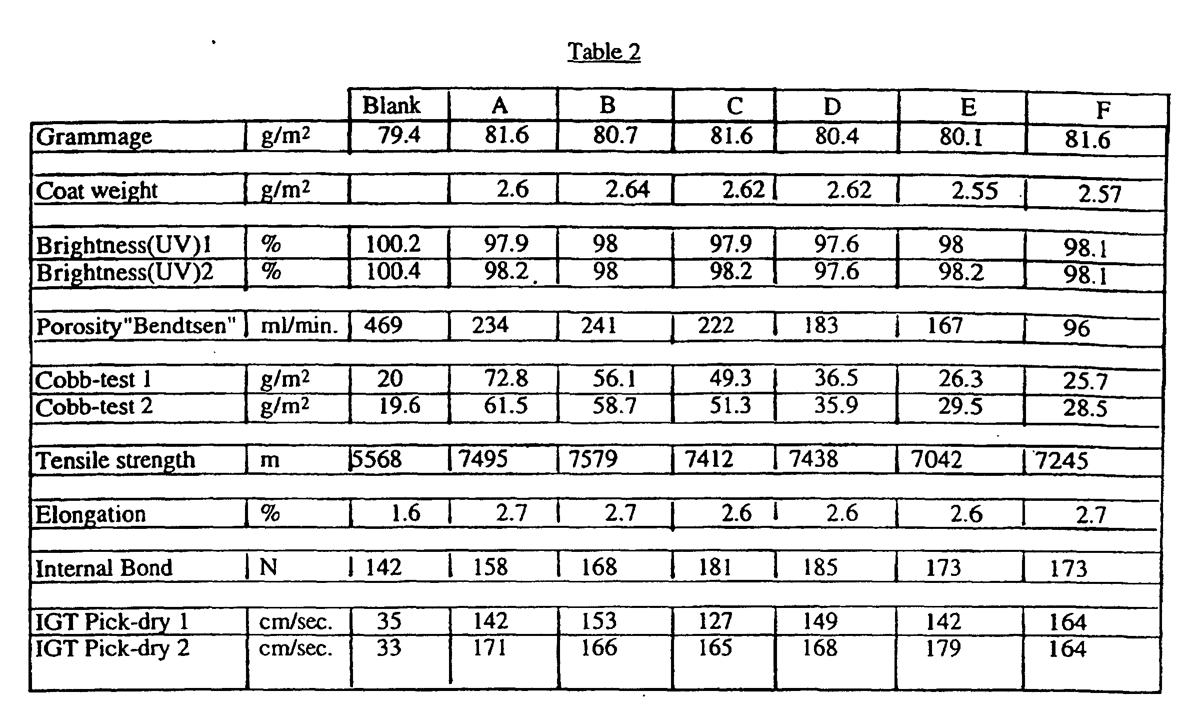

The effect of the sizing dispersions on water pick-up is measured by the Cobb test. The water pick-up decreases from A to E no further improvement being shown by F. A similar effect is noted for the porosity of the sheets although in this case dispersion F is significantly the least porous.

The surface sized sheets were also printed with a HP deskjet 500 C inkjet printer using black ink. A significant improvement of both feathering and print-through was detected. Such improvements are usually only achieved by the addition of synthetic sizing agents.

### d) Starch retention on repulping.

A paper sized in accordance with (c) above was repulped in a simulation of the recycling of paper. The loss of starch from the paper fibres was measured as "Chemical Oxygen Demand"(COD) and was found to be 95 mg/l. When the same test was carried out using the equivalent physical mixture of cationic starch and ASA-treated starch in accordance with the teaching of EP-A-350 668 the COD was found to be 275 mg/l indicating a far greater loss of starch from the paper fibres.

## Claims

1. A process for sizing a paper composition, **characterised by** incorporating in, or applying to, the paper a starch composition in which the starch molecules in the composition are substituted by both cationic and n-alkenylsuccinyl groups, wherein the n-alkenylsuccinyl group contains 5 to 20 carbon atoms in the alkenyl chain.

2. A process according to claim 1 **characterised in that** the cationic group is a tertiary amine or quaternary ammonium group.

3. A process according to claim 2 **characterised in that** the cationic substituent is a quaternary ammonium group introduced into the starch molecule by reaction with 3-chloro-2-(hydroxypropyl)-trialkylammonium chloride or its epoxide equivalent where "alkyl" is preferably methyl, ethyl or propyl.

4. A process according to any one of the preceding claims **characterised in that** the n-alkenylsuccinyl substituent is n-octenylsuccinyl.

5. A process according to any one of the preceding claims **characterised in that** the degree of substitution of the starch by the cationic group is 0.005 to *0.06* and the degree of substitution by the n-alkenylsuccinyl group is 0.01 to 0.05.

6. A process for the preparation of a starch composition for use in the process of any one of the preceding claims **characterised in that** a cationic starch is reacted with n-octenylsuccinic acid anhydride.

7. A process according to claim 6, **characterised in that** the composition comprises lightly degraded starch molecules substituted by both cationic and n-alkenylsuccinyl groups and that it is applied as an external size.

8. A process according to claim 7 in which the starch composition is gelatinised.

9. A process according to either claim 7 or claim 8, **characterised by** the presence in the starch composition of an aluminium salt.

10. A paper sizing composition comprising a gelatinised starch dispersion in which the starch molecules are substituted by both cationic and n-octenylsuccinyl groups.

11. A composition according to claim 10 **characterised in that** the gelatinised starch dispersion contains an antifoam agent.

12. A composition according to claim 10 or claim 11 which also comprises an aluminium salt.

## Patentansprüche

1. Verfahren zur Leimung einer Papierzusammensetzung, **dadurch gekennzeichnet**, das in das Papier eine Stärkezusammensetzung eingelagert oder auf das Papier aufgetragen wird, in der die Stärkemoleküle in der Zusammensetzung sowohl durch kationische als auch n-Alkenylsuccinylgruppen substituiert sind und worin die n-Alkenylsuccinylgruppe 5 bis 20 Kohlenstoffatome in der Alkenylkette enthält.

2. Verfahren nach Anspruch 1, **dadurch gekennzeichnet, daß** die kationische Gruppe eine tertiäre Aminoder quartäre Ammoniumgruppe ist

3. Verfahren nach Anspruch 2, **dadurch gekennzeichnet, daß** der kationische Substituent eine quartäre Ammoniumgruppe ist, die durch Reaktion mit 3-Chlor-2-(hydroxypropyl)-trialkylammoniumchlorid oder seinem Epoxidäquivalent in das Stärkemolekül eingeführt wird, wobei "Alkyl" vorzugsweise Methyl, Ethyl oder Propyl ist.

4. Verfahren nach einem der vorherigen Ansprüche, **dadurch gekennzeichnet, daß** der n-Alkenylsuccinylsubstituent n-Octenylsuccinyl ist

5. Verfahren nach einem der vorherigen Ansprüche, **dadurch gekennzeichnet, daß** der Substitutionsgrad der Stärke durch die kationische Gruppe 0,005 bis 0,06 beträgt und der Substitutionsgrad durch die n-Alkenylsuccinylgruppe 0,01 bis 0,05 beträgt

6. Verfahren zur Herstellung einer Stärkezusammensetzung zur Verwendung in dem Verfahren nach einem der vorherigen Ansprüche, **dadurch gekennzeichnet, daß** eine kationische Stärke mit n-Octenylbernsteinsäureanhydrid umgesetzt wird.

7. Verfahren nach Anspruch 6, **dadurch gekennzeichnet, daß** die Zusammensetzung leicht zersetzte Stärkemoleküle umfaßt, die sowohl durch kationische als auch durch n-Alkenylsuccinylgruppen substituiert sind, und sie als ein äußerer Leim aufgetragen wird.

8. Verfahren nach Anspruch 7, wobei die Stärkezusammensetzung gelatiniert wird.

9. Verfahren nach entweder Anspruch 7 oder Anspruch 8, **dadurch gekennzeichnet, daß** in der Stärke-Zusammensetzung ein Aluminiumsalz vorliegt

10. Papier-Leimzusammensetzung, umfassend eine gelatinierte Stärkedispersion, in der die Stärkemoleküle sowohl durch kationische als auch durch n-Octenylsuccinylgruppen substituiert sind.

11. Zusammensetzung nach Anspruch 10, **dadurch gekennzeichnet, daß** die gelatinierte Stärkedispersion ein Antischaummittel enthält.

12. Zusammensetzung nach Anspruch 10 oder Anspruch 11, die ebenso ein Aluminiumsalz enthält.

## Revendications

1. Procédé d'encollage d'une composition de papier, **caractérisé par** l'incorporation dans, ou l'application sur, le papier, d'une composition d'amidon, dans laquelle les molécules d'amidon dans la composition sont substituées par des radicaux cationiques et n-alcénylsuccinyle, où le radical n-alcénylsuccinyle contient 5 à 20 atomes de carbone dans la chaîne alcényle.

2. Procédé selon la revendication 1, **caractérisé en ce que** le radical cationique est un radical amine tertiaire ou ammonium quaternaire.

3. Procédé selon la revendication 2, **caractérisé en ce que** le substituant cationique est un radical ammonium quaternaire introduit dans la molécule d'amidon par réaction avec du chlorure de 3-chloro-2-(hydroxypropyl)trialkylammonium ou son équivalent époxyde où l'« alkyle » est, de préférence, du méthyle, de l'éthyle ou du propyle.

4. Procédé selon l'une quelconque des revendications précédentes, **caractérisé en ce que** le substituant n-alcénylsuccinyle est du n-octénylsuccinyle.

5. Procédé selon l'une quelconque des revendications précédentes, **caractérisé en ce que** le degré de substitution de l'amidon par le radical cationique est de 0,005 à 0,06 et le degré de substitution par le radical n-alcénylsuccinyle est 0,01 à 0,05.

6. Procédé de préparation d'une composition d'amidon à utiliser dans le procédé selon l'une quelconque des revendications précédentes, **caractérisé en ce qu'**un amidon cationique est mis à réagir avec l'anhydride d'acide n-octénylsuccinique.

7. Procédé selon la revendication 6, **caractérisé en ce que** la composition comprend des molécules d'amidon légèrement dégradées, substituées par des radicaux cationiques et n-alcénylsuccinyle et **en ce qu'**elle est appliquée comme encollage externe.

8. Procédé selon la revendication 7, dans laquelle la composition d'amidon est gélatinisée.

9. Procédé selon la revendication 7 ou 8, **caractérisé par** la présence dans la composition d'amidon d'un sel d'aluminium.

10. Composition d'encollage de papier, comprenant une dispersion d'amidon gélatinisé, dans laquelle les molécules d'amidon sont substituées par des radicaux cationiques et n-octénylsuccinyle.

11. Composition selon la revendication 10, **caractérisée en ce que** la dispersion d'amidon gélatinisé contient un agent antimousse.

12. Composition selon la revendication 10 ou 11, qui comprend également un sel d'aluminium.
